(19)

**Europäisches Patentamt**
**European Patent Office**
**Office européen des brevets**

(11) **EP 3 009 908 B1**

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(51) Int Cl.:
*G05D 23/19* (2006.01)    *F24F 11/00* (2006.01)
*G01K 17/00* (2006.01)    *F24D 9/00* (2006.01)

(21) Anmeldenummer: **14188679.6**

(22) Anmeldetag: **13.10.2014**

(54) **Verfahren und Vorrichtungsanordnung zur Erfassung, Bewertung und Beeinflussung von Heizenergieabgabeverteilungen innerhalb einer Gebäudehülle**

Method and device assembly for detecting, evaluating and influencing thermal energy discharge distributions within a building envelope

Procédé et agencement de dispositif destinés à enregistrer, évaluer et influencer la répartition de la distribution des énergies de chauffage au sein d'une enveloppe de bâtiment

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.04.2016 Patentblatt 2016/16**

(73) Patentinhaber:
• **METRONA WÄRMEMESSER UNION GMBH**
**81379 München (DE)**
• **Westsächsische Hochschule Zwickau**
**08056 Zwickau (DE)**

(72) Erfinder:
• **Schröder, Franz, Dr.**
**82054 Sauerlach (DE)**

• **Papert, Olaf**
**94526 Berg-Metten (DE)**
• **Teich, Tobias, Prof. Dr.**
**08496 Neumark (DE)**
• **Kretz, Daniel**
**08058 Zwickau (DE)**
• **Scharf, Oliver**
**08058 Zwickau (DE)**

(74) Vertreter: **Prinz & Partner mbB**
**Patent- und Rechtsanwälte**
**Rundfunkplatz 2**
**80335 München (DE)**

(56) Entgegenhaltungen:
**EP-A2- 2 151 676        EP-A2- 2 157 417**
**EP-A2- 2 327 971        WO-A1-2010/129913**
**US-A1- 2010 211 222    US-A1- 2012 054 124**

EP 3 009 908 B1

**Beschreibung**

Die Erfindung betrifft ein Verfahren zur Erfassung, Bewertung und Beeinflussung von Heizenergieabgabeverteilungen innerhalb einer Gebäudehülle. Die Erfindung betrifft ferner eine Vorrichtungsanordnung zur Durchführung eines solchen Verfahrens.

Aus der EP 2 327 971 A2 sind ein Verfahren und eine Vorrichtung zur Analyse der Wärmemengenverteilung in einem Heizsystem bekannt. Das Heizsystem umfasst Heizflächen, für die jeweils eine lokale Versorgungspumpe im Rücklauf der zugeordneten Heizfläche zur Versorgung der Heizfläche vorgesehen ist. Ferner sind erste Temperatursensoren zur Bestimmung der Rücklauftemperaturen der Heizflächen und ein zweiter Temperatursensor zur Bestimmung der zentralen Vorlauftemperatur vorgesehen. Eine Zentraleinheit berechnet die Volumenströme des Heizmediums, das sich durch die Heizflächen bewegt aus einem Betriebsparameter der lokalen Versorgungspumpen und die von den Heizflächen abgegebenen Wärmemengen aus den bestimmten bzw. berechneten Rücklauftemperaturen, Vorlauftemperaturen und Volumenströmen. Vorzugsweise wird zusätzlich noch eine die Umgebung der jeweiligen Heizfläche charakterisierende Raumlufttemperatur bestimmt.

Aufgabe der Erfindung ist es, eine messtechnische Erhebung und zusätzlich eine numerische sowie gegebenenfalls eine visuelle Abbildung der Heizenergieabgabeverteilung in Gebäuden auf diversen Zeitskalen für eine Optimierung der Energieabgaben bzw. des Verbraucherverhaltens unter Verwendung unterschiedlicher Rückkopplungsmechanismen zu nutzen.

Gelöst wird diese Aufgabe durch ein Verfahren mit den Merkmalen des Anspruchs 1 sowie durch eine Vorrichtungsanordnung mit den Merkmalen des Anspruchs 10. Vorteilhafte und zweckmäßige Ausgestaltungen des erfindungsgemäßen Verfahrens und der erfindungsgemäßen Vorrichtungsanordnung sind in den zugehörigen Unteransprüchen angegeben.

Das erfindungsgemäße Verfahren zur Erfassung, Bewertung und Beeinflussung von Heizenergieabgabeverteilungen innerhalb einer Gebäudehülle wird unter Verwendung einer Vielzahl von vernetzten Messeinheiten, insbesondere elektronischen Heizkostenverteilern, die einen ersten Temperatursensor zur Erfassung der Temperatur einer zugeordneten Heizfläche und einen zweiten Temperatursensor zur Erfassung der Lufttemperatur des Raums, in dem sich die Heizfläche befindet, aufweisen, durchgeführt und umfasst folgende Schritte:

- Bestimmen von Energieabgabeäquivalenten durch die Messeinheiten;

- Berechnen von effektiven Heizkörpertemperaturen (THeff) und effektiven Raumtemperaturen (TLeff) aus den von den jeweiligen Temperatursensoren der Messeinheiten gemessenen Temperaturwerten;

- Übertragen der Energieabgabeäquivalente sowie der effektiven Heizkörpertemperaturen (THeff) und der effektiven Raumtemperaturen (TLeff) von den Messeinheiten an eine Auswerteeinrichtung auf einer konfigurierbaren Zeitskala;

- Berechnen von spezifischen Energieabgabeverteilungen an den Messstellen auf Basis der Energieabgabeäquivalente sowie der effektiven Heizkörpertemperaturen (THeff) und der effektiven Raumtemperaturen, jeweils gewichtet im Verhältnis zu einem Außentemperaturkontrast;

- Bewerten der Energieabgabeverteilungen in Abhängigkeit von der effektiven Raumtemperatur (TLeff); und

- Auswählen von Maßnahmen aus einem Maßnahmenkatalog in Abhängigkeit der Bewertung.

Unter dem Außentemperaturkontrast im Sinne der Erfindung ist die Differenz zwischen einer Außentemperatur und der jeweiligen effektiven Raumtemperatur (TLeff) zu verstehen. Dabei kann die Außentemperatur ein konkret gemessener Wert oder ein aus einem Klimamodell übernommener und/oder insbesondere zeitlich angepasster Wert sein, worauf später noch genauer eingegangen wird. Das Auswählen der Maßnahmen zur Beeinflussung der Energieabgabeverteilungen erfolgt vorzugsweise automatisch.

Sinn und Wertschöpfungsidee der Erfindung sind die messtechnische Erhebung und zusätzlich die numerische wie visuelle Abbildung der Energieabgabeverteilungen in Gebäudeobjekten auf diversen Zeitskalen. Das erfindungsgemäße Verfahren ermöglicht dabei eine vergleichende Ermittlung und Visualisierung der Heizenergieabgabeverteilung in einem Gebäudeobjekt zur subsequenten Identifizierung von Heizenergieleckagen und überproportionalen Heizenergieabgaben sowie die Ausweisung situativ und akkumulativ entstehender Heizenergie-Einsparpotentiale.

Darüber hinaus können abhängig von der Bewertung im Falle eines erkannten signifikanten Energieeinsparpotentials unterschiedliche Maßnahmen ergriffen werden, die der erkannten bzw. vermuteten Situation gerecht werden. Die Bewertung der Energieabgabeverteilungen erfüllt den vorrangigen Zweck, den momentanen wie auch abgestuft integralen Zustand der "Heizgemeinschaft" in einer Symbiose sowohl (1) für den Nutzer der Wohnumgebung als auch (2) für die verwaltungstechnisch/operationell verantwortliche Stelle für die Anlagenbetriebsführung als auch (3) direkt für die messtechnische informatische Infrastruktur darzustellen.

Die Realisierung dieser symbiotischen Struktur resultiert aus der Erkenntnis, dass für einen energetisch optimierten Zustand einer Heizgemeinschaft und bei möglichen Störungen dieses Zustandes die Ursachen und korrigierende Einwirkungen von jeweils unterschiedlichen und auch von mehreren Ebenen aus notwendig und dann erst effektiv machen. Das vornehmliche Bestreben einer intelligenten Infrastruktur ist es, genau dieses symbiotische Handeln zu ermöglichen und bestmöglich zu fördern und zu koordinieren.

Unter diesem Gesichtspunkt der Bewertung und Beeinflussung geht es somit um die direkte parallele Generierung eines Verständnisses über den energetischen Istzustand des Gesamtsystems und daraus abzuleitende Maßnahmen zur Energieoptimierung auf verschiedenen Zeitskalen und auf quasi drei semantischen Ebenen:

- Die unmittelbare, d. h. kognitiv durch den Menschen (in der Rolle als Wohnungsnutzer) erfassbare Ebene, die subsequent eine menschliche Interaktion ermöglicht und unbedingt erwünscht.

- Die formale, d. h. verwaltungstechnische Prozessebene, die operationelle und logistische Aktionen initiiert und triggert (wohnungswirtschaftliche Hoheit / Kunde).

- Die Ebene der informatischen, d. h. vollautomatisierten Infrastruktur, welche in diesem Selbstverständnis auch die unmittelbare technische Anlagensteuerung mit einschließt.

Zur Verdeutlichung soll folgendes Beispiel dienen: Wenn in einem Raum ein Heizkörper im Winter auf Vollbetrieb läuft, stellt ein offenstehendes, aber "vergessenes" Fenster zur Wohnungslüftung ein substantielles Energieleck dar. Die intelligente Infrastruktur registriert und akkumuliert zunächst spezifische Extremverbräuche, weil der Temperaturkomfort extrem sinkt. Sie informiert auf kürzester Zeitskala den Wohnungsnutzer und fordert gegebenenfalls zur Intervention auf ("Bitte Fenster schließen." - Ebene 1). Bleibt die Reaktion aus oder erkennt die Infrastruktur gegebenenfalls die Abwesenheit von Bewohnern, so werden die betroffenen Heizstellen, gegebenenfalls temporär, auf ein zum Frostschutz minimal nötiges Niveau abgeregelt (Ebene 3). Bleiben re-justierende, interaktive Nutzereingriffe länger aus, so liegt unter Umständen eine längere Abwesenheit vor und/oder externe Einwirkungen, z. B. Glasbruch oder Einbruch. Hier kann die Infrastruktur automatisch eine operationelle Überprüfung durch den Anlagenbetreiber initiieren (Ebene 2).

Dem erfindungsgemäßen Verfahren liegt ein ubiquitär realisiertes Sensornetzwerk zugrunde, wobei vorteilhaft auf vorhandene oder ohnehin für eine Heizkostenabrechnung zu installierende elektronische Heizkostenverteiler zurückgegriffen werden kann, die dann nur geringfügig modifiziert werden müssen.

In der bevorzugten Ausführungsform der Erfindung werden als Messeinheiten genormte elektronische Heizkostenverteiler verwendet, die normgemäß betrieben werden, wobei das Übertragen der Energieabgabeäquivalente, der effektiven Heizkörpertemperaturen und der effektiven Raumtemperaturen unabhängig vom Normbetrieb auf kürzeren Zeitskalen erfolgt. Das bedeutet, die Übertragung der erfindungswesentlichen Messparameter erfolgt öfter als Übertragung der Energieäquivalente im regulär vorgesehenen Betriebsmodus der elektronischen Heizkostenverteiler.

Vorzugsweise wird zu einer Bewertung und/oder visuellen Darstellung der Energieabgabeverteilungen ein Zustandsdiagramm erstellt, in dem die spezifischen Energieabgabeverteilungen in Abhängigkeit von der effektiven Raumtemperatur aufgetragen werden.

Für eine aussagekräftige Bewertung und Darstellung der Energieabgabeverteilungen werden im Rahmen des erfindungsgemäßen Verfahrens sowohl eine absolute momentane Energieabgabeverteilung als auch eine spezifische momentane Energieabgabeverteilung informatisch gebildet. Die absolute momentane Energieabgabeverteilung kann mit folgender Formel dargestellt werden: $\Delta Eeff = (\Sigma\Delta E)i - (\Sigma\Delta E)i\text{-}1$, wobei i die aktuelle Messung ist. Die spezifische momentane Energieabgabeverteilung KWKd kann definiert werden als $KWKd \equiv \Delta Eeff / (TLeff - TAsmoo)$ in $[AU / (K*d)]$, wobei TAsmoo ein besonderer Außentemperaturwert ist, der später noch genauer erläutert wird. Mithilfe der absoluten momentanen Energieabgabeverteilung und der spezifischen momentane Energieabgabeverteilung können effektiv Heizenergieleckagen und überproportionale Heizenergieabgaben identifiziert sowie situativ und akkumulativ entstehende Heizenergie-Einsparpotentiale ausgewiesen werden.

Um jederzeit eine Kontrolle der Energieabgabeverteilung zu ermöglichen, ist gemäß einem besonderen Aspekt der Erfindung vorgesehen, dass die absolute momentane Energieabgabeverteilung und/oder die absolute akkumulierte Energieabgabeverteilung so verfügbar gehalten werden, dass sie auf Abruf einsehbar ist bzw. sind.

Wie bereits zuvor angedeutet, kann in die Bildung der spezifischen Energieabgabeverteilung eine meteorologische Modellkomponente eingehen, die insbesondere einen Kontrast zwischen effektiver Raumtemperatur und einer zeitlich verzögert wirksamen Außentemperatur berücksichtigt. Die Modellkomponente ist in diesem Fall eine Funktion der effektiven Raumtemperatur und einer zeitabhängigen Außentemperatur.

Zur informatischen Bewertung bzw. visuellen Darstellung der Energieabgabeverteilungen kann in einem zuvor bereits erwähnten Zustandsdiagramm eine statistische Identifizierung bzw. Separierung übermäßig hoher Energieabgabeereignisse durch eine über gleitend aufsteigende effektive Raumtemperatur-Intervalle ablaufende Teilmengenbildung vorgenommen werden.

Es erweist sich für die Durchführung des erfindungsgemäßen Verfahrens als vorteilhaft, im Rahmen der Bewertung und Beeinflussung der Energieabgabeverteilungen einen typischen Raumtemperaturbereich in mehrere Kriterienabschnitte (Regimes) zu unterteilen und die Auswahl der Maßnahmen zur Beeinflussung der Energieabgabeverteilungen in Abhängigkeit vom Kriterienabschnitt vorzunehmen, in den die jeweilige Energieabgabeverteilung eingeordnet ist. Die Regimes können variable Grenzbereiche haben, die sich weitgehend an mehr oder weniger verstandenen Nutzerverhaltensszenarien und Interaktionsmodellen zwischen Nutzer und Anlage orientieren sollen.

Ferner können für eine bessere Bewertung und Beeinflussung der Energieabgabeverteilungen unterschiedliche Baualtersklassen und bauphysikalische Modernisierungsstände von Gebäudeobjekten differenziert berücksichtigt werden, insbesondere indem Grenzwerte der spezifischen Energieabgaben multiplikativ und/oder Grenzwerte der effektiven Raumtemperaturen additiv modifiziert werden. Insbesondere können die später noch genauer erläuterten Parameter B, Max, TL1, TL2 und z in Anlehnung an andere empirisch-statistische Studienergebnisse festgelegt werden.

Die Erfindung schafft auch eine Vorrichtungsanordnung zur Erfassung, Bewertung und Beeinflussung von Heizenergieabgabeverteilungen innerhalb einer Gebäudehülle mit einer Vielzahl von vernetzten Messeinheiten, insbesondere elektronischen Heizkostenverteilern, die einen ersten Temperatursensor zur Erfassung der Temperatur einer zugeordneten Heizfläche und einen zweiten Temperatursensor zur Erfassung der Lufttemperatur des Raums, in dem sich die Heizfläche befindet, aufweisen, und einer Auswerteeinrichtung, wobei die einzelnen Vorrichtungen der Vorrichtungsanordnung zur Durchführung des erfindungsgemäßen Verfahrens eingerichtet sind.

Weitere Merkmale und Vorteile der Erfindung ergeben sich aus der nachfolgenden Beschreibung und aus den beigefügten Zeichnungen, auf die Bezug genommen wird. In den Zeichnungen zeigen:

- Figur 1 ein Schema der Basiskomponenten und Funktionalitäten des erfindungsgemäßen Verfahrens;

- Figur 2 Zustandsdiagramm der spezifischen Energieabgabe (linear) in Abhängigkeit des lokalen Temperaturkomforts TLeff (effektive Raumtemperatur);

- Figur 3 das Zustandsdiagramm der spezifischen Energieabgabe gemäß Figur 2, hier auf logarithmischer Ordinate;

- Figur 4 ein Schema für Kriterienbildung im Zustandsdiagramm der spezifischen Energieabgabe; und

- Figur 5 eine berechnete Zielvorstellung für eine Ereignisverschiebung im Zustandsdiagramm der spezifischen Energieabgabe.

Physische Voraussetzung und Basis für das weiter unten im Detail beschriebene Verfahren zur Erfassung, Bewertung und Beeinflussung von Heizenergieabgabeverteilungen innerhalb einer Gebäudehülle bildet eine normkonforme Installation eines Systems von elektronischen Heizkostenverteilern nach dem Zweifühlerverfahren gemäß DIN/EN 834, deren Daten zur Erstellung einer Heizkostenverteilung dienen und per Funktechnik übertragen werden.

In ihrer typischen Anwendung sind Heizkostenverteiler auf Heizflächen montiert und liefern nicht mehr als - üblicherweise monatlich - das Integral eines Energieabgabeäquivalentes, $\Sigma\Delta E$, der ihnen zugeordneten Heizflächen. Die von den elektronischen Heizkostenverteilern aufsummierten Äquivalenteinheiten, AU (für "arbitrary units"), sind näherungsweise als abgegebene Energieeinheiten in kWh interpretierbar, sofern die Heizfläche sich in einem spezifikationsgemäßen Betriebszustand befindet, entsprechen aber keiner streng kalorischen Maßeinheit. Die Summen von AUs in einem Ensemble von Messstellen (Heizflächen mit elektronischen Heizkostenverteilern) in einer Liegenschaft über einen festgelegten Zeitraum (in der Regel 12 Monate) bilden in ihrem Verhältnis zueinander die normgerechte Grundlage für eine Heizkostenabrechnung.

Die elektronischen Heizkostenverteiler übertragen üblicherweise die akkumulierten Summen an AUs monatlich per Funk an Datensammler, die in der jeweiligen Liegenschaft montiert sind. Klassisch erfolgt die Auswertung dieser Speicher einmal jährlich. In jüngster Zeit wird aber zunehmend auch eine monatliche Direktübermittlung technisch realisiert.

Darüber hinaus sieht die DIN/EN 834 keine weiteren Funktionalitäten für ein Heizkostenverteilersystem vor.

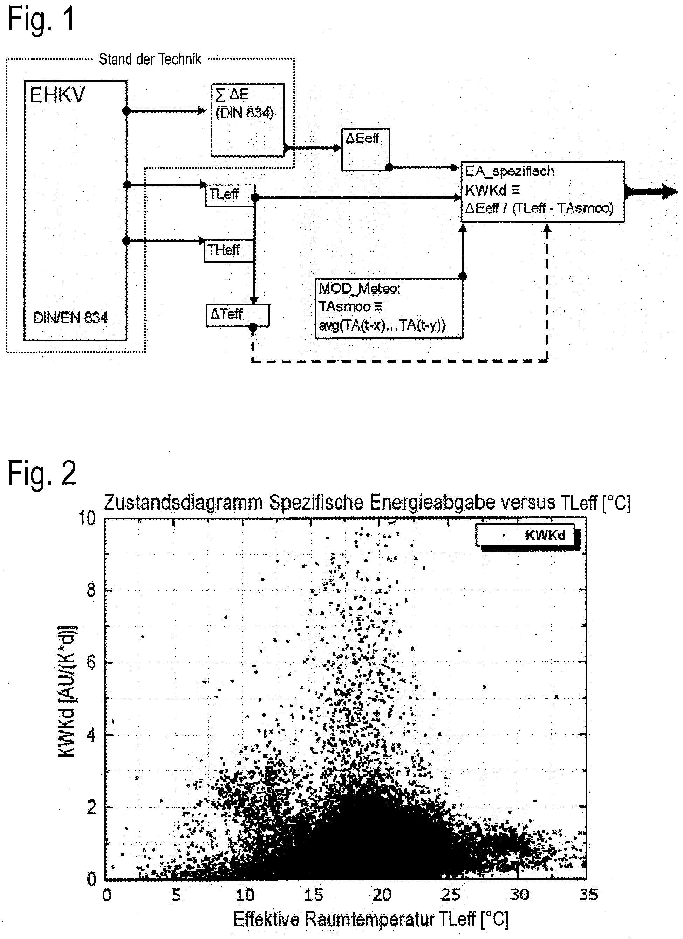

Die im Folgenden anhand von Figur 1 beschriebenen Zusatzfunktionalitäten gehen über die normkonforme Funktionalität von elektronischen Heizkostenverteilern hinaus und ermöglichen die Durchführung des erfindungsgemäßen Verfahrens zur Erfassung, Bewertung und Beeinflussung von Heizenergieabgabeverteilungen innerhalb einer Gebäudehülle.

Ein für das neue Verfahren vorgesehener elektronischer Heizkostenverteiler (EHKV) arbeitet mit seinen beiden Temperaturfühlern zur Erfassung der Heizflächentemperatur TH und der Raumtemperatur TL, wie es die DIN/EN 834 vorgibt, bildet darüber hinaus aber sowohl eine effektive Heizflächentemperatur THeff als auch eine effektive Raumtemperatur TLeff. Die effektiven Temperaturen sind keine Momentaufnahmen, sondern jeweils ein Mittelwert von vielfach innerhalb eines variabel konfigurierbaren Zeitintervalls, z. B. 30 Minuten, gemessenen Temperaturwerten.

In einem zusätzlich implementierten, vom Normbetrieb unabhängigen Betriebsmodus, erfolgt in kurzen zeitlichen Abständen eine Funkübertragung aller Messparameter, d.h. auf einer im Vergleich zur Häufigkeit der Funkübertragung im Normbetrieb deutlich verkürzten, konfigurierbaren Zeitskala. Insbesondere werden in diesem Betriebsmodus parallel zum Normbetrieb die Werte $\Sigma\Delta E$, TLeff, THeff übertragen und einer Auswerteeinrichtung zugänglich gemacht, wo kontinuierlich eine Auswertung und Verarbeitung der Daten erfolgen kann.

Die Auswertung und Verarbeitung der Daten sieht vor, die Energieabgabeverteilung über alle beteiligten Messstellen sowohl auf absoluter Skala ($\Delta E$eff) als auch "spezifisch" (EA_spezifisch), d. h. gewichtet im Verhältnis zum wirksamen Temperaturkontrast nach außen, darzustellen (siehe Figur 1).

Die sukzessiven Werte der absoluten Energieabgabe $\Delta E$eff errechnen sich dabei unmittelbar aus den Differenzen aufeinander folgender Werte von $\Sigma\Delta E$:

$$\Delta Eeff = (\textstyle\sum\Delta E)_i - (\textstyle\sum\Delta E)_{i-1} \quad (1)$$

Zur Festlegung der spezifischen Energieabgabe, KWKd, wird ein zusätzlicher meteorologischer Modellparameter, TAsmoo, eingeführt. TAsmoo bezeichnet die sogenannte "wirksame" Außentemperatur auf die Innenraumtemperatur und ist quasi als "Tiefpass" der Außentemperaturentwicklung, typischerweise der vorangegangenen 24 bis 48 Stunden, anzusehen. Je nach isolationstechnischer Qualität der Gebäudehülle können hier unterschiedliche Verzögerungswerte zur Anwendung kommen. Für die Definition der spezifischen Energieabgabe gilt dann:

$$KWKd \equiv \Delta Eeff / (TLeff - TAsmoo) \text{ in } [AU / (K{*}d)] \quad (2)$$

Die spezifische Energieabgabe wird in AU pro Grad Kelvin und Tag angegeben.

Die Zusammenschau der spezifischen Energieabgabe an allen vorhandenen Messstellen und unter verschiedensten Außentemperaturbedingungen, jeweils gegen den dort vorherrschenden Temperaturkomfort TLeff, erfolgt in einem Zustandsdiagramm. In Figur 2 ist beispielhaft ein solches Zustandsdiagramm der spezifischen Energieabgabe (linear) in Abhängigkeit des lokalen Temperaturkomforts TLeff (effektive Raumtemperatur) dargestellt. Die Punktemenge umfasst hier Ereignisse innerhalb eines Gebäudes in drei aufeinander folgenden Wintern, jeweils zwischen November und März.

Anhand einer so entstehenden Punktewolke lässt sich anhand der entstehenden Häufungen zwischen typischen, selteneren und extremeren Energieabgabesituationen differenzieren. Visuell und suggestiv ist in Figur 2 bereits zu erkennen, dass die Häufung der Ereignisse sich in bestimmten Bereichen von effektiven Raumtemperaturen und spezifischen Energieabgaben abspielt und dass die Bewertung von extremeren (= höheren) KWKd-Werten für unterschiedliche Temperaturbereiche unterschiedlich ausfallen muss.

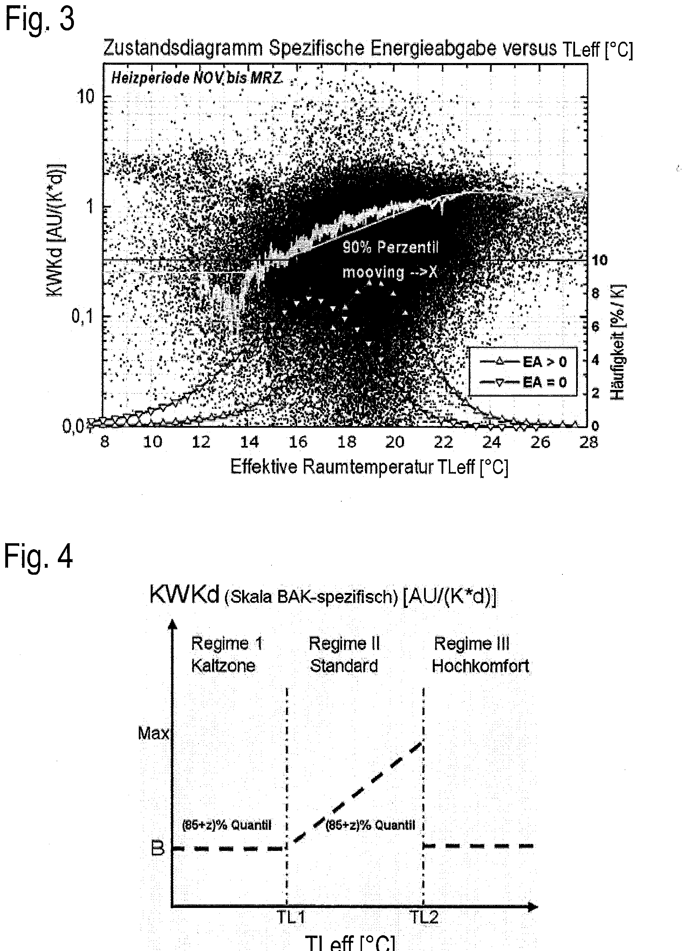

Für eine genaue informatische Bewertung ist eine statistisch-numerische Analyse der Ereignisse notwendig. Figur 3, in der das Zustandsdiagramm von Figur 2 mit logarithmischer Ordinate wiedergegeben ist, macht weitere Details sichtbar. Die helle Punktmenge (mit Hilfslinie) markiert den Verlauf der 90%-Perzentile im gleitenden Mittel über die Abszisse. Die dunkle Punktewolke besteht aus Ereignissen mit KWKD > 0 (EA > 0). Die rechte Glockenkurve (Dreiecke aufwärts) bildet die zugehörige Häufigkeitsverteilung an Raumtemperaturen TLeff. Nicht zu sehen sind alle Ereignisse mit KWKd = 0 (EA = 0). Deren korrespondierende Häufigkeitsverteilung wird durch die linke Glockenkurve (Dreiecke abwärts) dargestellt.

So ergibt sich aus Figur 3 beispielsweise das ungefähre Verhältnis von betriebenen Heizflächen (EA > 0) zu abgeschalteten Heizflächen (EA = 0). Außerdem ist erkennbar, dass die Modalwerte der zugehörigen Raumtemperaturverteilungen etwa typisch 2,5 K auseinander liegen.

Aus der gleitenden statistischen Behandlung aller Ereignisse entlang der Abszisse ergibt sich die helle Punktemenge von 90%-Perzentilen (inkl. Hilfslinie) als Quasi-Grenze zwischen den 10% "höchsten" spezifischen Energieabgabeereignissen (vergleichsweise große KWKd-Werte) gegenüber allen übrigen 90% spezifischen Energieabgabeereignissen. Der Grundansatz zur systematischen Identifizierung von energetischen Einsparpotentialen beruht nun darauf, diesen 10 % höchsten Energieabgabeereignissen solche Energieeinsparpotentiale zu unterstellen. Natürlich ist die Praxis nicht auf einen bestimmten Perzentilbereich festgelegt; vielmehr kann sich dieser auch erst aus tatsächlichen Erfahrungswerten herausbilden.

Das Prinzip jedoch, die spezifische Energieabgabe KWKd als wichtigsten Bewertungsparameter zu würdigen und die konkrete Auswahl der (noch zu erläuternden) Identifizierungskriterien an spezifischen Energieabgaben in Abhängigkeit vom herrschenden Temperaturkomfort TLeff festzumachen, bildet den Kern des hier beschriebenen Verfahrens.

Figur 4 zeigt ein Schema für die Bildung von Kriterien in einem Zustandsdiagramm der spezifischen Energieabgabe und konkretisiert das grundsätzliche Vorgehen bei der Bewertung eines Ereignisses in Abhängigkeit von der vorherrschenden effektiven Raumtemperatur TLeff.

Der Bereich unterhalb einer vorgegebenen Grenztemperatur TL1 (z. B. 14 °C) wird als Kaltzone (Regime 1) bezeichnet. Die entsprechenden Wohnumgebungen sind offenbar stark unterkühlt, und es wird daher davon ausgegangen, dass sich Wohnungsnutzer dort nicht aufhalten. Sofern andererseits dort substantielle oder hohe KWKd-Werte auftreten, wird unterstellt, dass "Energieleckagen" vorliegen, z. B. unbemerkt über längere Zeit offenstehende Fenster oder Türen. Aus diesem Grund werden im Verfahren alle KWKd-Werte oberhalb eines Niveaus "B" (in der Regel nach Wahl ein hoher Quantil, z. B. (85+z)%) als unbedingt korrekturwürdig eingestuft.

Ähnliches gilt für hohe und sehr hohe KWKd-Werte im Bereich von Standardtemperaturen (Regime 2, zwischen TL1 und TL2, z. B. 14 bis 21°C), mit dem Unterschied, dass Wohnungsnutzer hier in den meisten Fällen anwesend sein dürften. Möglicherweise ist der Temperaturkomfort noch ausreichend, um teiloffene bzw. gekippte Fenster nicht als unangenehm wahrzunehmen. Oder es sind ggf. einzelne kalte Innenwandflächen vorhanden (Wärmebrücken), die Unbehaglichkeit vermitteln, welche dann durch überproportional aktive Heizflächen wieder ausgeglichen wird. Das Regime 2 ist gemäß Figur 4 dadurch gekennzeichnet, dass das Grenzkriterium für überproportional hohe KWKd rampenförmig mit TLeff ansteigt und etwa mit "Max" eine Sättigung erreicht. Im oberen Bereich von Regime 2 befindet sich die Majorität der "aktiv bewohnten" Räume, und nur eine Minderheit von Ereignissen ist noch oberhalb von TL2 angesiedelt.

Keine Energiesenken werden in der sog. "Hochkomfortzone" (Regime 3) unterstellt, die oberhalb von TL2 (hier exemplarisch 21°C) angesiedelt ist. In diesem Bereich wird nur auf die direkte Verminderung der Energieabgabe, also Komfortverzicht, abgezielt.

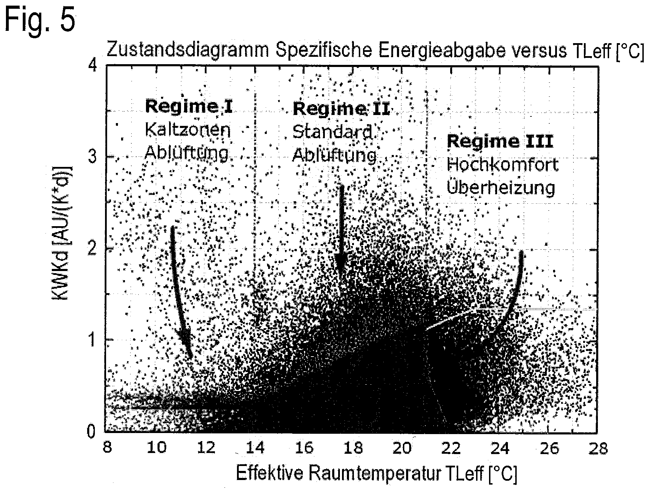

Ziel aller Maßnahmen, steuerungstechnisch wie auch durch direkte Nutzerinformation, ist die sukzessive "Rückführung" extrem positionierter Zustandspunkte in einen enger umrissenen Bereich, wie etwa durch die graue (helle) Punktemenge in Figur 5 angedeutet. Die Figur zeigt eine Zielvorstellung für eine Ereignisverschiebung im Zustandsdiagramm der spezifischen Energieabgabe, wobei schwarze (dunkle) Punkte die Ausgangssituation (Realdaten) darstellen und graue (helle) Punkte den idealisierten Endzustand nach informeller und technischer Optimierung.

Einem ersten Ansatz zufolge werden ausschließlich die 10 % aller Zustände mit der höchsten Energieabgabe in allen drei Regimen, sowie zusätzlich etwa ¾ aller Zustände mit ursprünglich TLeff > 21 °C adressiert. Diese Zielgruppen bestehen zusammen aus nicht mehr als 15 % aller Ereignisse, machen statistisch aber bereits über 55 % der abgegebenen Heizenergie insgesamt aus. Die Reduktion der Energieabgabe dieser identifizierten Zustände auf den in Figur 3 markierten Grenzbereich (helle Punkte, um die 90%-Perzentile) beinhaltet ein Energieeinsparpotential von insgesamt etwa 25 %, wobei letzeres direkt aus der Bilanzierung der zugehörigen absoluten Energiebeträge ΔEeff ermittelt wird.

Von 25 % Energieeinsparungspotential insgesamt entfielen knapp 3 % auf Regime 1; knapp 10 % kämen für Regime 3 infrage, bedürften aber einer "Bearbeitung" von nahezu 10 % aller Ereignisse. In Regime 3 ist die vollständige Nutzung des Einsparpotentials schwieriger, da zusätzlicher Temperaturkomfort einem bewussten Nutzerwunsch entsprechen und auf einen unerwünschten Komfortverzicht hinauslaufen kann. Zusätzlich sind Erfassung und Bewertung einzelner Situation gelegentlich mehrdeutig, da auch unrealistisch hohe TLeff-Werte in Verbindung mit sehr geringer spezifischer Energieabgabe angezeigt werden. In diesen Fällen treten Zusatzbewertungen von THeff und ΔTeff in Kraft, um ggf. einen nicht spezifikationsgerechten Betrieb des elektronischen Heizkostenverteilers im Manipulationsmodus (nach DIN/EN 834) anzuzeigen.

Etwa 13 % und damit der Hauptanteil des Einsparpotentials entfällt schließlich auf Regime 2 und gebündelt auf etwa 10 % aller Ereignisse. Hier ergibt sich Raum für automatisierbare Nachregelungen von Anlagensteuerungen in Verbindung mit allgemein gehaltener Nutzerinformation, denn der konkrete Anlass für erhöhte spezifische Energieabgabe lässt sich ohne Zusatzinformationen nicht mit Sicherheit erschließen. Grundsätzlich soll ein Verhalten gefördert werden, das nach Möglichkeit die Verteilung der Energieabgabe auf eine größere Anzahl von Heizflächen begünstigt. In jedem Fall kann eine Visualisierung der Abgabeverteilung für den Wohnungsnutzer das Verständnis von Wärmeströmen in seiner Wohnumgebung unterstützen oder zumindest eine bewusstere Wahrnehmung bewirken.

Weitergehend sind die grundsätzlichen Randbedingungen und Eckdaten, die sich aus der Determinierung der Parameter TL1, TL2, B, Max und z ergeben, nicht als universelle Werte im Verfahren zu betrachten, sondern stehen im realen Objektfall zusätzlich in Abhängigkeit zur Baualtersklasse des Gebäudes, respektive seines bauphysikalischen Sanierungsstandes. Umfassendere statistische Analysen haben gezeigt, dass mit zunehmender Effizienz der thermischen Hüllenisolation die Temperaturkontraste im Innenbereich schrumpfen, die mittleren TLeff-Werte anwachsen und der Benutzungsgrad und die absolute Energieabgabe der Heizflächen abnehmen. Von nichtmodernisierten Altbauten bis hin zu EnEV2002/2009-Standards wird sich dadurch im Zustandsdiagramm die KWKd-Sakla um etwa einen Faktor 2 stauchen, während in X-Richtung (TLeff) eine Verschiebung des Bildes um 1-2 K auftritt. Entsprechende Trends können in der konkreten Anwendung des Verfahrens mitberücksichtigt und abgebildet werden.

Wie bereits erwähnt kann das Verfahren mithilfe von Standard-Heizkostenverteilern durchgeführt werden, die zwei Temperaturfühler zur Erfassung der Heizflächentemperatur bzw. der Raumlufttemperatur aufweisen und gemäß DIN/EN 834 Energieabgabeäquivalente aufsummieren und über ein Funkmodul zur drahtlosen (asynchronen) Datenübermittlung an einen Funktransceiver verfügen. Die elektronischen Heizkostenverteiler sind so eingerichtet, dass sie zusätzlich zeitlich hochaufgelöst eine effektive Raumtemperatur TLeff und eine effektive Heizflächentemperatur THeff (keine Temperaturen gemäß DIN/EN 834) übermitteln.

Des Weiteren kann zur Berücksichtigung der aktuellen Witterungsverhältnisse bei der Bewertung der Energieabgabe an den Messstellen ein meteorologisches Modell herangezogen werden, wie etwa in der DE 10 2008 054 301 A1 beschrieben. Es ist dann nicht erforderlich, die jeweiligen Außentemperaturen zu messen und zu übertragen; vielmehr können aus dem Modell für den jeweiligen Standort vorliegende Werte zugrundegelegt werden.

Ein wesentlicher Aspekt des beschriebenen Verfahrens ist darin zu sehen, dass zur Optimierung der Energieabgabe in den verschieden Bereichen der Raumtemperatur unterschiedliche Rückkopplungsmechanismen zwischen Mensch und Heizungssteuerung bzw. Wärmedienstleister ("Maschine") realisiert werden: So ist der Bereich TLeff < T1 (Regime 1) prädestiniert für direkte Rückkopplung durch den Nutzer (Ebene 1). Der Bereich TLeff > T2 (Regime 3) ebenso, aber mit der Option, dass über generelle Vereinbarungen zwischen Mieter und Verwaltung (Ebene 2) der Nutzer hier in variablen Grenzen "Autonomie abgeben kann" an die Maschine (Ebene 3), die dann automatisiert das TL nach oben begrenzt. Der Bereich T1 < TLeff < T2 (Regime 2) ist prädestiniert für automatischen Eingriff einer Systemsteuerung, in kleinem Maße, aber häufig (Ebene 3), also auch für die prinzipiell abgegebene Autonomie. Eine solche Mischung von Steuerungsprinzipien in dieser Form dürfte den Interessen aller Beteiligten sehr nah kommen.

**Patentansprüche**

1. Verfahren zur Erfassung, Bewertung und Beeinflussung von Heizenergieabgabeverteilungen innerhalb einer Gebäudehülle unter Verwendung einer Vielzahl von vernetzten Messeinheiten, insbesondere elektronischen Heizkostenverteilern, die einen ersten Temperatursensor zur Erfassung der Temperatur einer zugeordneten Heizfläche und einen zweiten Temperatursensor zur Erfassung der Lufttemperatur des Raums, in dem sich die Heizfläche befindet, aufweisen, mit folgenden Schritten:

   - Bestimmen von Energieabgabeäquivalenten durch die Messeinheiten;
   - Berechnen von effektiven Heizkörpertemperaturen (THeff) und effektiven Raumtemperaturen (TLeff) aus den von den jeweiligen Temperatursensoren der Messeinheiten gemessenen Temperaturwerten;
   - Übertragen der Energieabgabeäquivalente sowie der effektiven Heizkörpertemperaturen (THeff) und der effektiven Raumtemperaturen (TLeff) von den Messeinheiten an eine Auswerteeinrichtung auf einer konfigurierbaren Zeitskala;
   - Berechnen von spezifischen Energieabgabeverteilungen an den Messstellen auf Basis der Energieabgabeäquivalente sowie der effektiven Heizkörpertemperaturen (THeff) und der effektiven Raumtemperaturen, jeweils gewichtet im Verhältnis zu einem Außentemperaturkontrast;
   - Bewerten der Energieabgabeverteilungen in Abhängigkeit von der effektiven Raumtemperatur (TLeff); und
   - Auswählen von Maßnahmen aus einem Maßnahmenkatalog in Abhängigkeit der Bewertung.

2. Verfahren nach Anspruch 1, **dadurch gekennzeichnet, dass** als Messeinheiten genormte elektronische Heizkostenverteiler verwendet werden, die normgemäß betrieben werden, wobei das Übertragen der Energieabgabeäquivalente, der effektiven Heizkörpertemperaturen (THeff) und der effektiven Raumtemperaturen (TLeff) unabhängig vom Normbetrieb auf kürzeren Zeitskalen erfolgt.

3. Verfahren nach Anspruch 1 oder 2, **dadurch gekennzeichnet, dass** zu einer Bewertung und/oder visuellen Darstellung der Energieabgabeverteilungen ein Zustandsdiagramm erstellt wird, in dem die spezifischen Energieabgabeverteilungen in Abhängigkeit von der effektiven Raumtemperatur (TLeff) aufgetragen werden.

4. Verfahren nach einem der vorhergehenden Ansprüche, **dadurch gekennzeichnet, dass** zur Bewertung und/oder Darstellung der Energieabgabeverteilungen eine absolute momentane Energieabgabeverteilung und eine spezifische momentane Energieabgabeverteilung informatisch gebildet werden.

5. Verfahren nach Anspruch 4, **dadurch gekennzeichnet, dass** die absolute momentane Energieabgabeverteilung und/oder die absolute akkumulierte Energieabgabeverteilung so verfügbar gehalten werden, dass sie auf Abruf einsehbar ist bzw. sind.

6. Verfahren nach Anspruch 4 oder 5, **dadurch gekennzeichnet, dass** in die Bildung der spezifischen Energieabgabeverteilung eine meteorologische Modellkomponente eingeht, die insbesondere einen Kontrast zwischen effektiver Raumtemperatur (TLeff) und einer zeitlich verzögert wirksamen Außentemperatur (TAsmoo) berücksichtigt.

7. Verfahren nach einem der vorhergehenden Ansprüche, **dadurch gekennzeichnet, dass** zur Bewertung und/oder Darstellung der Energieabgabeverteilungen eine statistische Identifizierung übermäßig hoher Energieabgabeereignisse durch eine über gleitend aufsteigende effektive Raumtemperatur-Intervalle ablaufende Teilmengenbildung vorgenommen wird.

8. Verfahren nach einem der vorhergehenden Ansprüche, **dadurch gekennzeichnet, dass** im Rahmen der Bewertung und Beeinflussung der Energieabgabeverteilungen ein typischer Raumtemperaturbereich in mehrere Kriterienabschnitte unterteilt wird und dass die Auswahl der Maßnahmen zur Beeinflussung der Energieabgabeverteilungen in Abhängigkeit vom Kriterienabschnitt vorgenommen wird, in den die jeweilige Energieabgabeverteilung eingeordnet ist.

9. Verfahren nach Anspruch 8, **dadurch gekennzeichnet, dass** im Rahmen der Bewertung und Beeinflussung der Energieabgabeverteilungen unterschiedliche Baualtersklassen und bauphysikalische Modernisierungsstände von Gebäudeobjekten differenziert berücksichtigt werden, insbesondere indem Grenzwerte der spezifischen Energieabgaben multiplikativ und/oder Grenzwerte der effektiven Raumtemperaturen (TLeff) additiv modifiziert werden..

10. Vorrichtungsanordnung zur Erfassung, Bewertung und Beeinflussung von Heizenergieabgabeverteilungen innerhalb einer Gebäudehülle mit einer Vielzahl von vernetzten Messeinheiten, insbesondere elektronischen Heizkostenverteilern, die einen ersten Temperatursensor zur Erfassung der Temperatur einer zugeordneten Heizfläche und einen zweiten Temperatursensor zur Erfassung der Lufttemperatur des Raums, in dem sich die Heizfläche befindet, aufweisen, und einer Auswerteeinrichtung, die zur Durchführung des Verfahrens nach einem der vorhergehenden Ansprüche eingerichtet sind.

**Claims**

1. A method of detecting, assessing and influencing heating energy output distributions within a building envelope using a plurality of networked measuring units, in particular electronic heat cost allocators having a first temperature sensor for detecting the temperature of an associated heating surface and a second temperature sensor for detecting the air temperature of the room in which the heating surface is located, comprising the following steps:

   - determining energy output equivalents by means of the measuring units;
   - calculating effective radiator temperatures (THeff) and effective ambient temperatures (TLeff) from the temperature values measured by the respective temperature sensors of the measuring units;
   - transmitting the energy output equivalents and the effective radiator temperatures (THeff) and the effective ambient temperatures (TLeff) from the measuring units to an evaluation means on a configurable time scale;
   - calculating specific energy output distributions at the measuring points on the basis of the energy output equivalents and the effective radiator temperatures (THeff) and the effective ambient temperatures, each weighted in relation to an external temperature contrast;
   - assessing the energy output distributions as a function of the effective ambient temperature (TLeff); and
   - selecting measures from a catalogue of measures as a function of the assessment.

2. The method according to claim 1, **characterized in that** standardized electronic heat cost allocators which are operated according to standards are used as measuring units, the transmission of the energy output equivalents, the effective radiator temperatures (THeff) and the effective ambient temperatures (TLeff) being carried out on shorter time scales irrespective of the standard operation.

3. The method according to claim 1 or 2, **characterized in that** a state diagram in which the specific energy output distributions are plotted against the effective ambient temperature (TLeff) is drawn up for the assessment and/or visual representation of the energy output distributions.

4. The method according to any of the preceding claims, **characterized in that** an absolute instantaneous energy output distribution and a specific instantaneous energy output distribution are formed in a computerized manner for the assessment and/or representation of the energy output distributions.

5. The method according to claim 4, **characterized in that** the absolute instantaneous energy output distribution and/or the absolute accumulated energy output distribution (is) are kept available so as to be visible on request.

6. The method according to claim 4 or 5, **characterized in that** a meteorological model component is included in the creation of the specific energy output distribution, which in particular takes a contrast between the effective ambient temperature (TLeff) and an exterior temperature (TAsmoo) active in a time-delayed manner into account.

7. The method according to any of the preceding claims, **characterized in that** for the assessment and/or representation of the energy output distributions, a statistic identification of excessively high energy output events is carried out by a subset formation realized with effective ambient temperature intervals increasing in a sliding manner.

8. The method according to any of the preceding claims, **characterized in that** within the framework of the assessment and influencing of the energy output distributions, a typical ambient temperature range is subdivided into several criteria sections and **in that** the selection of the measures for influencing the energy output distributions is carried out as a function of the criteria section into which the respective energy output distribution is classified.

9. The method according to claim 8, **characterized in that** within the framework of the assessment and influencing of the energy output distributions, different classes of building ages and different modernization conditions in terms of building physics of building objects are taken into account in a differentiated manner, particularly by modifying limit values of the specific energy outputs in a multiplicative manner and/or by modifying limit values of the effective ambient temperatures (TLeff) in an additive manner.

10. Device arrangement for the detection, assessment and influencing of heating energy output distributions within a building envelope using a plurality of networked measuring units, in particular electronic heat cost allocators having a first temperature sensor for detecting the temperature of an associated heating surface and a second temperature sensor for detecting the air temperature of the room in which the heating surface is located, and an evaluation means which is configured to carry out the method according to any of the preceding claims.

**Revendications**

1. Procédé de détection, d'estimation et d'influence de distributions de dégagement d'énergie de chauffage à l'intérieur d'une enveloppe de bâtiment en utilisant une pluralité d'unités de mesure mises en réseau, en particulier des répartiteurs de frais de chauffage électroniques qui présentent un premier capteur de température pour la détection de la température d'une surface chauffée associée et un deuxième capteur de température pour la détection de la température de l'air de la pièce dans laquelle la surface chauffée se trouve, comprenant les étapes suivantes :

    - détermination d'équivalents de dégagement d'énergie au moyen des unités de mesure,
    - calcul de températures de radiateur effectives (THeff) et de températures ambiantes effectives (TLeff) à partir des valeurs de température mesurées par les capteurs de température respectifs des unités de mesure,
    - transmission des équivalents de dégagement d'énergie ainsi que des températures de radiateur effectives (THeff) et des températures ambiantes effectives (TLeff) des unités de mesure à un moyen d'évaluation sur une échelle de temps configurable,
    - calcul de distributions de dégagement d'énergie spécifiques aux points de mesure sur la base des équivalents de dégagement d'énergie et des températures de radiateur effectives (THeff) et des températures ambiantes effectives, chacune pondérée par rapport à un contraste de température extérieure,
    - estimation des distributions de dégagement d'énergie en fonction de la température ambiante effective (TLeff), et
    - sélection de mesures à partir d'un catalogue de mesures en fonction de l'estimation.

2. Procédé selon la revendication 1, **caractérisé en ce que** des répartiteurs de frais de chauffage électroniques standardisés sont utilisés en tant qu'unités de mesure, lesquels sont mis en oeuvre conformément aux normes, la transmission des équivalents de dégagement d'énergie, des températures de radiateur effectives (THeff) et des températures ambiantes effectives (TLeff) étant effectuée indépendamment du fonctionnement normal sur des échelles de temps plus courtes.

3. Procédé selon la revendication 1 ou 2, **caractérisé en ce que** pour une estimation et/ou une représentation visuelle des distributions de dégagement d'énergie, un diagramme d'état est établi sur lequel les distributions de dégagement d'énergie spécifiques sont portées en fonction de la température ambiante effective (TLeff).

4. Procédé selon l'une des revendications précédentes, **caractérisé en ce que** pour une estimation et/ou une représentation des distributions de dégagement d'énergie, une distribution de dégagement d'énergie momentanée absolue et une distribution de dégagement d'énergie momentanée spécifique sont formées de manière informatique.

5. Procédé selon la revendication 4, **caractérisé en ce que** la distribution de dégagement d'énergie momentanée absolue et/ou la distribution de dégagement d'énergie accumulée absolue sont maintenue disponible(s) de manière à être visible(s) sur demande.

6. Procédé selon la revendication 4 ou 5, **caractérisé en ce qu'**une composante de modèle météorologique qui en particulier tient compte d'un contraste entre la température ambiante effective (TLeff) et une température extérieure à effet retardé dans le temps (TAsmoo) intervient dans la formation de la distribution de dégagement d'énergie spécifique.

7. Procédé selon l'une des revendications précédentes, **caractérisé en ce que** pour une estimation et/ou une représentation des distributions de dégagement d'énergie, une identification statistique d'évènements de dégagement d'énergie excessivement élevés est effectuée par la formation de sous-ensembles réalisée par des intervalles de température ambiante effectifs croissants de manière mobile.

8. Procédé selon l'une des revendications précédentes, **caractérisé en ce que** dans le cadre de l'estimation et de l'influence des distributions de dégagement d'énergie, une plage de températures ambiantes typique est divisée en plusieurs sections de critères et **en ce que** le choix des mesures pour l'influence des distributions de dégagement d'énergie est effectué en fonction de la section de critères dans lequel la distribution de dégagement d'énergie respective est classée.

9. Procédé selon la revendication 8, **caractérisé en ce que** dans le cadre de l'estimation et de l'influence des distributions de dégagement d'énergie, différentes classes d'âge de bâtiment et différents états de modernisation d'objets de construction concernant la physique du bâtiment sont pris en compte de manière différenciée, en particulier en modifiant des limites des dégagements d'énergie spécifiques de manière multiplicative et/ou en modifiant des limites des températures ambiantes effectives (TLeff) de manière additive.

10. Agencement de dispositif pour la détection, l'estimation et l'influence de distributions de dégagement d'énergie de chauffage à l'intérieur d'une enveloppe de bâtiment en utilisant une pluralité d'unités de mesure mises en réseau, en particulier des répartiteurs de frais de chauffage électroniques qui présentent un premier capteur de température pour la détection de la température d'une surface chauffée associée et un deuxième capteur de température pour la détection de la température de l'air de la pièce dans laquelle se trouve la surface chauffée, et un moyen d'évaluation qui est aménagé pour la réalisation du procédé selon l'une des revendications précédentes.

# Fig. 1

# Fig. 2

## Fig. 3

Zustandsdiagramm Spezifische Energieabgabe versus TLeff [°C]

Effektive Raumtemperatur TLeff [°C]

## Fig. 4

KWKd (Skala BAK-spezifisch) [AU/(K*d)]

## Fig. 5

Zustandsdiagramm Spezifische Energieabgabe versus TLeff [°C]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2327971 A2

- DE 102008054301 A1